# FASCICULE DE BREVET EUROPEEN

(11) **EP 3 265 948 B1**
(45) Date de publication et mention de la délivrance du brevet: **23.01.2019**
(21) Numéro de dépôt: 16714996.2
(22) Date de dépôt: 03.03.2016
(51) Int. Cl.: G06F 21/41, H04L 29/06, G06F 21/44

(54) **TRANSFERT SÉCURISÉ D'INFORMATION D'AUTHENTIFICATION**
SICHERE ÜBERTRAGUNG VON AUTHENTIFIZIERUNGSDATEN
SECURE TRANFER OF AUTHENTICATION INFORMATION

(30) Priorité: 03.03.2015 FR 1551784
(43) Date de publication de la demande: 10.01.2018
(73) Titulaire: Wallix, 75008 Paris (FR)
(72) Inventeur: ADDA, Serge, 92160 Antony (FR); ZHOU, Raphaël, 94600 Choisy Le Roi (FR)
(74) Mandataire: IP Trust
(86) Numéro de dépôt international: PCT/FR2016/050482
(87) Numéro de publication internationale: WO 2016/139427

(56) Documents cités:
- WO-A1-2014/064686
- US-A1- 2014 020 072

## Description

### Domaine de l'invention

La présente invention concerne le domaine des serveurs d'application, et plus particulièrement des procédés et des systèmes d'accès à des ressources applicatives hébergées sur un ou plusieurs serveurs, par un utilisateur.

### Etat de la technique

On connaît en particulier dans l'état de la technique la demande de brevet internationale WO 2014064686 décrivant un système et procédé d'authentification sécurisée basée sur une passerelle mandataire. Ce document divulgue un système et un procédé d'authentification sécurisée facilitant l'amélioration de la sécurité d'une authentification entre un client et une cible au moyen d'un module d'authentification innovant sur une passerelle mandataire. Selon l'invention, le client peut se connecter à la passerelle mandataire au moyen d'un protocole natif et fournit des informations d'identification d'utilisateur à la passerelle mandataire.

L'invention facilite la connexion entre le client et la cible de sorte qu'il est inutile, pour l'utilisateur, d'être en possession des informations d'identification d'accès de cible. La passerelle mandataire peut éventuellement être connectée à un système de gestion d'accès privilégié qui peut fournir et/ou stocker des informations d'identification d'accès de cible. Les informations d'identification d'accès de cible fournies par la passerelle mandataire facilitent la prévention contre une faille dans la sécurité du client qui expose les informations d'identification d'accès de cible.

### Inconvénients de l'art antérieur

La solution proposée par la demande WO2014064686 ne concerne pas explicitement un procédé d'accès sécurisé à des applications mais seulement à des ressources d'infrastructure telles qu'un serveur ou un routeur. Cette demande concerne l'accès à une cible, correspondant expressément à un serveur et non pas une application hébergée par un serveur.

### Solution apportée par l'invention

L'objet de la présente invention n'est pas seulement de sécuriser l'accès à un serveur, mais plus précisément de sécuriser l'accès à des applications hébergées sur un serveur, afin de permettre par exemple l'utilisation à un compte partagé par plusieurs utilisateurs en gardant l'imputabilité des actions opérées sous ce compte.

A cet effet, l'invention concerne selon son acception la plus générale un procédé de connexion sécurisée à une application exécutée sur un serveur depuis un équipement informatique client, par un utilisateur ne disposant pas des données d'authentification du compte déclaré dans ladite application, ledit compte comprenant au moins une identité ID_{proxy}, application et des données d'authentification associées, mettant en oeuvre un proxy [passerelle mandataire] comprenant une mémoire pour l'enregistrement, pour chaque utilisateur déclaré par un compte primaire comprenant au moins une identité IDᵤₜᵢₗᵢₛₐₜₑᵤᵣ, de la liste des cibles C_{ressources, comptes} auquel il a accès, le procédé comprenant les étapes suivantes :
- ouverture par l'utilisateur d'une connexion à un proxy au moyen d'un protocole d'administration natif multicanal [SSH, RDP ou ICA,...], avec une première identité IDᵤₜᵢₗᵢₛₐₜₑᵤᵣ pour l'ouverture d'une session multicanale primaire
- définition simultanée [dans les paramètres de connexion] ou séquentielle [sélection après ouverture de la connexion parmi une liste proposée par le proxy] de l'application (cible).
- connexion du proxy au serveur d'hébergement de ladite application sélectionnée au moyen du même protocole d'administration natif multicanal [SSH, RDP ou ICA,...] avec une seconde identité ID_{proxy, serveur} pour ouvrir une session multicanal secondaire
- enregistrement temporaire d'une information Iᵣₑₗₐᵢ correspondant au lien entre ladite session primaire et ladite session secondaire
- exécution sur le serveur d'un code informatique [script] ouvrant un canal entre ledit serveur et ledit proxy, dans le cadre de ladite session secondaire,
- envoie par ledit code sur ledit canal d'une requête demandant, pour ladite application et ledit compte, les données d'authentification [password]
- en réponse à cette requête, transmission par le proxy de ces données d'authentification si la cible définie par ladite application et ledit compte appartient à la liste des cibles C_{ressources, comptes} enregistrées pour ledit utilisateur
- et exécution de ladite application et transmission à ladite application par ledit code des données utilisateurs ou notification d'erreur si le compte n'appartient pas à ladite liste.
Un des avantages de ce procédé est que l'application peut ensuite être utilisée grâce à la même connexion que celle ayant servie à l'accès à la passerelle.

Avantageusement, le procédé comporte en outre une étape de sélection d'un serveur d'application parmi une pluralité de serveur hébergeant la même application.

Selon un mode de mise en oeuvre particulier, ledit code informatique est enregistré sur le serveur d'application.

De préférence, ledit code informatique est enregistré par le proxy sur ledit serveur d'application avec un nom à usage unique.

Selon une variante, ledit code informatique enregistré sur le serveur d'application contient un jeton à usage unique transmis avec ladite requête.

De préférence, l'application peut être utilisée par deux utilisateurs différents ayant pour identités ID _{utilisateur A} et ID _{utilisateur B}. Pour cela, chacune des sessions secondaires est exécutée avec une identité différente (ID_{proxy,serveur A} et ID_{proxy,serveur B}). Ces identités sont choisies automatiquement par le proxy parmi les identités configurées de façon à ne jamais avoir au même moment deux sessions secondaires avec la même identité.

### Description détaillée d'un exemple non limitatif de réalisation

La présente invention sera mieux comprise à la lecture de la description qui suit, se référant à des exemples non limitatifs de réalisation, illustrés par les dessins annexés où :
- la figure 1 représente un schéma de l'architecture fonctionnelle de l'invention
- la figure 2 représente un schéma de l'architecture fonctionnelle d'une variante de réalisation de l'invention
- la figure 3 représente une vue schématique des données échangées entre les différentes ressources informatiques.

### Architecture fonctionnelle

L'utilisateur est un administrateur de ressources d'un système d'information (SI) (serveurs, applications, routeurs...) disposant de droits limités d'administrateur, pour un ensemble de ressources dont il a la charge.

Il dispose d'un terminal (100) communiquant avec la passerelle mandataire (300) (ou « passerelle d'administration ») par l'intermédiaire d'un canal (201) d'une connexion (200) selon un protocole par exemple SSH (« secure shell ») ou RDP (« remote desktop protocol»).

La connexion entraîne la création d'une session primaire (301) sur la passerelle (300).

L'utilisateur est identifié par des identifiants numériques qui lui sont propres, et définissant ses droits, ainsi que l'imputation des actions qu'il effectue.

La passerelle (300) comporte une base de données (302) dans laquelle sont enregistrés les identifiants des utilisateurs autorisés ainsi que les droits associés, définissant les cibles (comptes et équipements) sur lesquelles l'utilisateur est en droit d'agir.

Lors de la connexion, deux modes de sélection de la ressource sont possibles :
- selon le premier mode, l'utilisateur précise, lors de la connexion, la cible à laquelle il veut accéder. Dans ce cas la passerelle vérifie si l'utilisateur identifié par son identifiant dispose des autorisations nécessaires pour accéder à cette cible, en fonction des informations enregistrées dans la base de données (302).
- Selon le deuxième mode, la passerelle transmet à l'utilisateur la liste des cibles correspondant aux données enregistrées dans la base de données (302) en relation avec l'identifiant transmis, pour permettre à l'utilisateur de sélectionner l'une des cibles proposées.

L'étape suivante consiste à ouvrir une connexion (400), généralement avec le même protocole SSH ou RDP, ou encore avec un deuxième protocole avec le compte associé à la cible sélectionnée. Cette connexion ouvre une session secondaire (501) sur la cible.

Lorsque la cible est une application (504), la passerelle (300) choisi le serveur (500) adéquat à l'exécution de ladite application. A cet effet, la base de données (302) comprend une liste des applications et des serveurs hébergeant chacune desdites applications, ainsi que les comptes permettant de se connecter à ces serveurs.

Lorsque plusieurs serveurs hébergent une même application, la passerelle réalise une balance des charges en fonction du nombre de connexions déjà ouvertes vers chacun des serveurs, et sélectionne pour la nouvelle requête le serveur le moins sollicité.

De même, en absence de réponse par un serveur hébergeant une application, la passerelle recherche successivement les autres serveurs hébergeant la même application, pour sélectionner une cible disponible.

L'étape suivante consiste à exécuter un code informatique (502) pour :
- interroger la passerelle (requête 402) en vue d'obtenir les informations d'authentification correspondant au compte de l'application, c'est-à-dire l'identifiant ID_{proxy,application} ainsi que les données d'authentification associées à ce compte, par exemple un mot de passe ou un certificat cryptographique, ou un ticket Kerberos. Ces données sont renvoyées par la passerelle (réponse 403). La requête et la réponse sont effectuées dans un canal ouvert à cet effet par le code informatique.
- injecter ces données (503) dans l'application (504) afin d'ouvrir une session applicative et permettre à l'utilisateur d'utiliser ladite application.

Ce code peut être :
- installé sur le serveur (500) de manière permanente. Dans ce cas, le chemin d'accès à ce code est défini dans la base de données (302)
- ou transmis transitoirement, par un canal dédié (401) prévu dans le protocole multicanal, pour être exécuté transitoirement sur le serveur (500).

Le nom de ce code peut être généré de manière unique, afin de rendre plus difficile l'altération de ce code pendant l'exécution de l'application, par une attaque informatique.

Ce code installé transitoirement peut également comporter un jeton unique afin de réduire les risques d'accès non autorisé aux données enregistrées dans la base (302), au moyen de la session ouverte, par un attaquant ayant accès au serveur (500).

### Accès concurrent à des applications sur un même serveur par plusieurs utilisateurs.

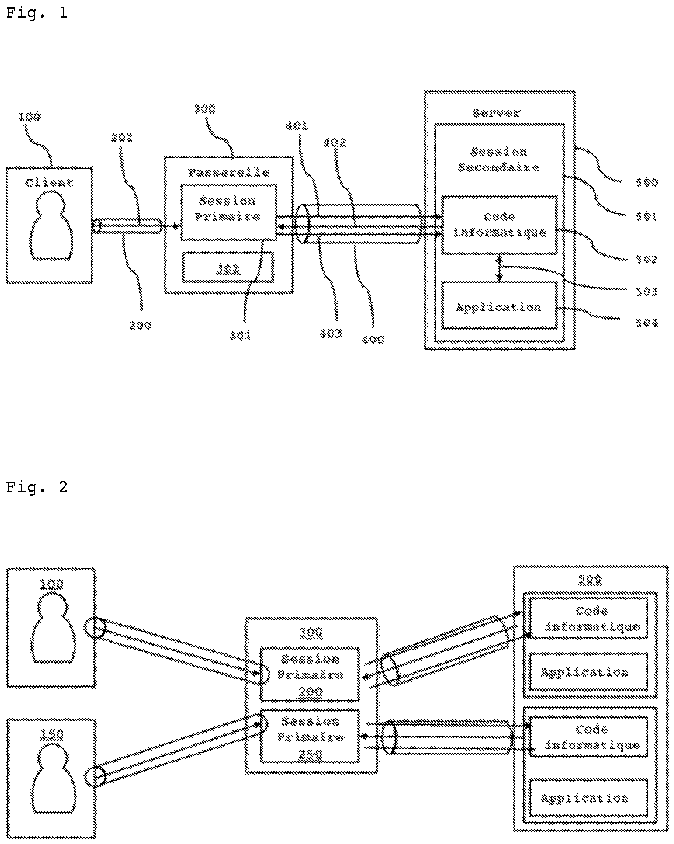

La figure 2 représente un schéma fonctionnel d'une solution permettant à plusieurs utilisateurs d'accès à des applications hébergées sur un même serveur. Le but est d'éviter les interférences entre les sessions primaires (200 et 250), et de les rendre étanches en termes de sécurité.

A cet effet, lorsqu'un second utilisateur (150) cherche à exécuter une application hébergée sur le même serveur (500) qu'une application exécutée pour un premier utilisateur (100), la passerelle (300) inhibera les données de la base (302) relatives au compte utilisé par le premier utilisateur (100), sur le serveur (500). Elle n'autorisera l'exécution d'une application sur ce même serveur (500) que si un compte reste disponible pour un second utilisateur (150).

### Données échangées entre les ressources informatiques

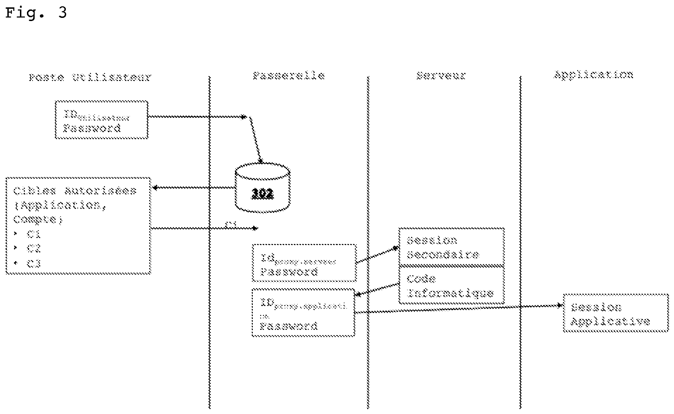

La figure 3 représente une vue schématique des données échangées entre les différentes ressources informatiques.

Lors de la connexion par un utilisateur, le terminal (100) transmet à la passerelle mandataire (300) les données d'authentification numériques suivantes :
- IDᵤₜᵢₗᵢₛₐₜₑᵤᵣ
- Mot de passe

Ces données d'authentification peuvent être constituées, à la place du mot de passe, d'un ticket Kerberos ou d'un certificat X509).

Ces données d'authentification sont vérifiées par la passerelle (300), en fonction des informations enregistrées dans sa base de données (302).

En cas de validation, la passerelle (302) transmet la liste des cibles autorisées.

Chaque cible correspond à un couple :
- application
- compte associé à l'application.

Le compte comprend :
- une information d'identification
- une information d'authentification, telle qu'un mot de passe.

La passerelle transmet à l'utilisateur (100), pour chacune des cibles autorisées, seulement la désignation de l'application et la désignation de l'identifiant du compte, mais pas l'information d'authentification, sous la forme de chaines de caractères désignant les couples application/compte.

L'utilisateur (100) sélectionne l'une des cibles proposées et en transmet l'identifiant à la passerelle (300).

La passerelle (300) choisit un serveur, et un compte pour ouvrir une session sur ledit serveur (500) selon le processus de sélection du serveur et du compte préalablement décrit.

Elle ouvre ainsi une session secondaire, sur le serveur, en exécutant le code informatique correspondant à l'application. Ce code demande à la passerelle l'identifiant du compte de l'application ainsi que les données d'authentification associées à ce compte.

Le code informatique transmet alors ces informations à l'application pour commander l'exécution de l'application.

L'invention permet au code informatique d'interroger la passerelle sans nécessiter de nouvelle authentification par l'utilisateur, car il le fait par le biais d'une connexion déjà authentifiée.

## Revendications

1. Procédé de connexion sécurisé à une application (504) exécutée sur un serveur (500) depuis un équipement informatique client, par un utilisateur (100) ne disposant pas des données d'authentification du compte déclaré dans ladite application, ledit compte comprenant au moins une identité ID_{proxy,application} et des données d'authentification associées, mettant en oeuvre un proxy (300) comprenant une mémoire pour l'enregistrement, pour chaque utilisateur déclaré par un compte primaire comprenant au moins une identité IDᵤₜᵢₗᵢₛₐₜₑᵤᵣ, de la liste des cibles C_{ressources, comptes} auquel il a accès, le procédé comprenant les étapes suivantes :
- ouverture par l'utilisateur d'une connexion (200) avec le proxy au moyen d'un protocole d'administration natif multicanal, avec une première identité IDᵤₜᵢₗᵢₛₐₜₑᵤᵣ pour l'ouverture d'une session multicanal primaire (301),
- définition simultanée ou séquentielle de l'application,
- connexion du proxy au serveur d'hébergement de ladite application sélectionnée au moyen du même protocole d'administration natif multicanal avec une seconde identité ID_{proxy,serveur} pour ouvrir une session multicanal secondaire (501),
- enregistrement temporaire d'une information Iᵣₑₗₐᵢ correspondant au lien entre ladite session primaire et ladite session secondaire
- exécution sur le serveur d'un code informatique (502) ouvrant un canal entre ledit serveur et ledit proxy, dans le cadre de ladite session muticanal secondaire,
- envoie par ledit code sur ledit canal d'une requête demandant, pour ladite application et ledit compte, les données d'authentification
- en réponse à cette requête, transmission par le proxy de ces données d'authentification si la cible définie par ladite application et ledit compte appartient à la liste des cibles C_{ressources, comptes}, associées à un identifiant ID_{proxy,application}, enregistrée pour ledit utilisateur,
- et exécution de ladite application et transmission (503) à ladite application par ledit code des données utilisateurs ou notification d'erreur si le compte n'appartient pas à ladite liste.

2. Procédé de connexion sécurisée à une application selon la revendication précédente, comportant en outre une étape de sélection d'un serveur d'application parmi une pluralité de serveur hébergeant la même application.

3. Procédé de connexion sécurisée à une application selon l'une quelconque des revendications précédentes, dans lequel le code informatique est enregistré sur le serveur d'application (500).

4. Procédé de connexion sécurisé à une application selon la revendication précédente, dans lequel le code informatique est enregistré par le proxy (300) sur le serveur d'application (500) avec un nom à usage unique.

5. Procédé de connexion sécurisé à une application selon la revendication 3 ou 4, dans lequel le code informatique enregistré sur le serveur d'application (500) contient un jeton à usage unique transmis avec la requête.

6. Procédé de connexion sécurisé à une application selon la revendication 3 ou 4, dans lequel l'application (504) est utilisée par deux utilisateurs (100, 150) différents ayant pour identités ID_{utilisateur A} et ID_{utilisateur B}, chacune des sessions secondaires étant exécutée avec une identité différente (ID_{proxy,/serveur A} et ID_{proxy,serveur B}), lesdites identités étant choisies automatiquement par le proxy (300) parmi les identités configurées de façon à ne jamais avoir au même moment deux sessions secondaires avec la même identité.

## Patentansprüche

1. Gesichertes Verfahren zur Herstellung einer Verbindung mit einer Anwendung (504), die von einer Client-Datenverarbeitungsanlage aus auf einem Server (500) von einem Nutzer (100) ausgeführt wird, der keine Authentifizierungsdaten für das in besagter Anwendung gemeldete Konto besitzt, wobei besagtes Konto mindestens eine Identität ID_{Proxy}, Anwendung und damit verknüpfte Authentifizierungsdaten umfasst, wobei ein Proxy (300) benutzt wird, der für jeden Benutzer, der über ein primäres Konto mit mindestens einer Identität ID_{Benutzer} angemeldet ist, einen Speicher zur Speicherung der vom Benutzer zugänglichen Liste der Ziele C_{Ressourcen}, _{Konto} umfasst, wobei das Verfahren folgende Schritte umfasst:
- die Öffnung einer Verbindung (200) zum Proxy durch den Benutzer mittels eines nativen Mehrkanal-Administrationsprotokolls mit einer ersten Identität ID_{Benutzer} zur Öffnung einer primären Mehrkanalsitzung (301),
- die gleichzeitige oder sequentielle Konfiguration der Anwendung,
- die Verbindung des Proxy mit dem Host-Server der besagten Anwendung, die über das gleiche native Mehrkanal-Administrationsprotokoll mit einer zweiten Identität ID_{Proxy, Server} ausgewählt wird, um eine sekundäre Mehrkanal-Sitzung (501) zu eröffnen,
- die temporäre Speicherung einer Information I_{Relais}, welche der Verknüpfung zwischen besagter primärer Sitzung und besagter sekundärer Sitzung entspricht,
- im Rahmen der besagten sekundären Mehrkanal-Sitzung Ausführung eines Programmcodes (502) auf dem Server, der einen Kanal zwischen besagtem Server und besagtem Proxy öffnet,
- das Senden einer Anforderung an besagten Kanal mittels besagten Codes, in welcher die Authentifizierungsdaten für besagte Anwendung und besagtes Konto angefordert werden,
- als Antwort auf diese Anforderung die Übermittlung dieser Authentifizierungsdaten vom Proxy, wenn das von besagter Anwendung und besagtem Konto definierte Ziel zu der für besagten Benutzer gespeicherten Liste der Ziele C_{Ressourcen}, _{Konten}, gehört, die mit einer Kennung ID_{Proxy, Anwendung} verknüpft sind,
- die Ausführung besagter Anwendung und die Übermittlung (503) der Benutzerdaten oder der Fehlerbenachrichtigung, falls das Konto nicht zu besagter Liste gehört, mittels besagten Codes an besagte Anwendung.

2. Gesichertes Verfahren zur Herstellung einer Verbindung mit einer Anwendung nach dem vorhergehenden Anspruch, welches des Weiteren einen Schritt umfasst, in dem ein Anwendungsserver aus einer Vielzahl von Servern, auf denen die gleiche Anwendung gehostet wird, ausgewählt wird.

3. Gesichertes Verfahren zur Herstellung einer Verbindung zu einer Anwendung nach einem der vorhergehenden Ansprüche, in welchem der Programmcode auf dem Anwendungsserver (500) gespeichert wird.

4. Gesichertes Verfahren zur Herstellung einer Verbindung zu einer Anwendung nach dem vorhergehenden Anspruch, in welchem der Programmcode über den Proxy (300) auf dem Anwendungsserver (500) mit einem Namen gespeichert wird, der dem einmaligen Gebrauch dient.

5. Gesichertes Verfahren zur Herstellung einer Verbindung zu einer Anwendung nach Anspruch 3 oder 4, in dem der auf dem Anwendungsserver (500) gespeicherte Programmcode ein mit der Anforderung übermitteltes Token enthält, das für den einmaligen Gebrauch bestimmt ist.

6. Gesichertes Verfahren zur Herstellung einer Verbindung zu einer Anwendung nach dem Anspruch 3 oder 4, in dem die Anwendung (504) von zwei unterschiedlichen Benutzern (100, 150) verwendet wird, wobei diese die Identitäten ID_{Benutzer A} und ID_{Benutzer B} haben, wobei jede der sekundären Sitzungen mit einer unterschiedlichen Identität ausgeführt wird (ID _{Proxy,/Server A} und ID_{Proxy, Server B}), wobei besagte Identitäten vom Proxy (300) aus den konfigurierten Identitäten automatisch so ausgewählt wird, dass nie zwei sekundäre Sitzungen mit der gleichen Identität zum gleichen Zeitpunkt stattfinden.

## Claims

1. A method for a secure connection to an application (504) run on a server (500) from a client computer device, by a user (100) who does not have the authentication data of the account declared in said application, said account comprising at least one identity ID_{proxy,application} and associated authentication data, implementing a proxy (300) comprising a memory for recording, for each user declared by a primary account comprising at least one identity IDᵤₛₑᵣ, the list of the targets C_{resources,accounts} which said user has access to, with the method comprising the following steps:
- opening, by the user, of a connection (200) with the proxy by means of a multichannel native administration protocol, with a first identity IDᵤₛₑᵣ for the opening of a primary multichannel session (301),
- simultaneous or sequential definition of the application,
- connection of the proxy to the server hosting said application selected using the same multichannel native administration protocol with a second identity ID_{proxy,user} to open a secondary multichannel session (501),
- temporary recording of a piece of information I_{relay} corresponding to the link between said primary session and said secondary session
- running, on the server, of a computer code (502) opening a channel between said server and said proxy, as part of said secondary multichannel session,
- sending, using said code, on said channel, of a request, requesting, for said application and said account, the authentication data
- in response to this request, transmission, by the proxy, of the authentication data if the target defined by said application and said account belongs to the list of targets C_{resources,accounts}, associated with an identifier ID_{proxy,application} recorded for said user,
- and running of said application and transmission (503) to said application, using said code, of the user data or error notification if the account does not belong to said list.

2. A method for a secure connection to an application according to the preceding claim, further comprising a step of selecting an application server among a plurality of servers hosting the same application.

3. A method for a secure connection to an application according to any one of the preceding claims, wherein the computer code is recorded on the application server (500).

4. A method for a secure connection to an application according to the preceding claim, wherein the computer code is recorded by the proxy (300) on the application server (500) with a one-time name.

5. A method for a secure connection to an application according to claim 3 or 4, wherein the computer code recorded on the application server (500) contains a one-time token transmitted with said request.

6. A method for a secure connection to an application according to claim 3 or 4, wherein the application (504) can be used by two different users (100, 150) whose identities are ID_{userA} and ID_{userB}, with each of the secondary sessions being run with a different identity (ID_{proxy,/serverA} and ID_{proxy,serverB}), with said identities being automatically selected by the proxy (300) among the identities so configured as never to have two secondary sessions with the same identity at the same time.
